(19) Europäisches Patentamt
European Patent Office
Office européen des brevets

(11) **EP 2 169 306 A1**

(12) **EUROPEAN PATENT APPLICATION**

(43) Date of publication:
**31.03.2010 Bulletin 2010/13**

(51) Int Cl.:
***F23D 1/00*** (2006.01)     ***F23D 17/00*** (2006.01)

(21) Application number: **09171043.4**

(22) Date of filing: **23.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.09.2008 US 241623**

(71) Applicant: **General Electric Company Schenectady, NY 12345 (US)**

(72) Inventors:
  • **Morrison, Donald K.**
    **Clinton, OH 44216 (US)**

• **Zhou, Wei**
  **Foothill Ranch, CA 92610 (US)**
• **Moyeda, David Kelly**
  **Laguna Hills, CA 92653 (US)**
• **Frato, Bob**
  **Stilwell, KS 66085 (US)**
• **Waltz, Robet W.**
  **Canton, OH 44708 (US)**

(74) Representative: **Bedford, Grant Richard GE International Inc.**
    **Global Patent Operation - Europe**
    **15 John Adam street**
    **London WC2N 6LU (GB)**

(54) **Systems and methods for facilitating varying size coal pipes for a pulverized coal burner**

(57)     Embodiments of the invention can include systems and methods for facilitating varying coal pipes for a pulverized coal burner. In one embodiment, a method for improving operation of a pulverized coal burner (600) is characterised by at least one coal pipe (604) having an inner diameter (608), and an outer diameter (604). The method can include installing at least one sleeve (602) or at least one liner within the coal pipe (604) between the inner (608) and outer diameter of the coal pipe (604), wherein velocity of a primary air and pulverized coal mixture is increased in an upstream portion of the coal pipe. The method can also include reducing the at least one sleeve (602) or liner, wherein velocity (Vexit) of the primary air and pulverized coal mixture is reduced in a downstream portion of the coal pipe.

Fig. 6

**Description**

The invention generally relates to pulverized coal burners, and more particularly relates to systems and methods for facilitating varying size coal pipes for a pulverized coal burner.

Pulverized coal burners are utilized in combustion and heat transfer processes within utility and industrial boiler furnaces of coal-fired power plants and other power generating facilities. In a typical furnace, raw coal is crushed into small pieces, conveyed to coal feed hoppers, pulverized into a very fine powder, mixed with primary air, and blown through a furnace coal pipe, wherein the fine coal is directed to a coal burner where the mixture of primary air and coal is ignited upon introduction to the furnace. The subsequent combustion of the primary air and coal mixture heats the furnace to generate steam used for power generation and other plant purposes.

Extracting maximum energy from pulverized coal while minimizing environmental pollutants sometimes requires careful control of the fuel delivery and combustion process. Excess nitrogen oxides (NOx) can be produced at the burner when the flame is not carefully controlled, or when it becomes unstable, as is often the case when the air/coal mixture velocity is too high when introduced at the burner end. However, the air/coal mixture velocity must be high enough within the coal delivery pipe so that the coal particles do not fall out of the air and collect in or otherwise clog the coal delivery pipe. These two opposing requirements (high air/coal mixture velocity in the coal delivery pipe and low air/coal mixture velocity at the burner end) present a difficult challenge for boiler and service engineers, particularly as furnace output and/or air/coal mixture velocity requirements change.

Many existing pulverized coal burners were designed with coal pipe geometries tuned to a certain air/fuel injection and velocity rate. As new industrial pollution limits, process refinements, etc. are implemented, existing pulverized coal burners may not be suitable to maintain or otherwise attain certain upstream and downstream air/coal mixture velocity requirements, and new coal burner components, such as different sized coal delivery pipes, may need to be installed to stabilize the burner flame and eliminate coal dropout. Such installations can be time consuming and expensive.

Therefore, a need exists for systems, methods, and apparatus for facilitating varying size coal pipes for a pulverized coal burner.

A further need exists for systems, methods, and apparatus to modify or retrofit existing coal pipes as injection speeds or other system parameters are changed to meet new requirements.

A further need exists for systems, methods, and apparatus for improving operation of a pulverized coal burner.

Embodiments of the invention can include systems and methods for facilitating varying size coal pipes for a pulverized coal burner. Other embodiments of systems, apparatuses and methods for improving the operation of a pulverized a coal burner can also be provided. Certain embodiments of the invention can utilize existing parts of a coal pipe together with newly added sleeves, liners and/or transition ramps to meet target air/coal mixture velocities within the coal pipe and at the burner without having to replace the entire coal pipe assembly.

In one embodiment, a method for improving operation of a pulverized coal burner can include at least one coal pipe having an inner diameter, and an outer diameter. In addition, the method can include installing at least one sleeve or at least one liner within the coal pipe between the inner and outer diameter of the coal pipe, wherein velocity of a primary air and pulverized coal mixture is increased in an upstream portion of the coal pipe. The method can also include reducing the at least one sleeve or liner, wherein velocity of the primary air and pulverized coal mixture is reduced in a downstream portion of the coal pipe.

In one embodiment, an apparatus for improving operation of a pulverized coal burner can include at least one coal pipe having an inner diameter, and an outer diameter. The method can include installing at least one sleeve or at least one liner within the coal pipe between the inner and outer diameter of the coal pipe, wherein velocity of a primary air and pulverized coal mixture is increased in an upstream portion of the coal pipe. The method can also include reducing the at least one sleeve or at least one liner, wherein velocity of the primary air and pulverized coal mixture is reduced in a downstream portion of the coal pipe.

In one embodiment, a combustion system can be provided. The combustion system can include at least one burner starter, at least one core pipe, wherein the at least one burner starter is mounted within at least one core pipe. The system can include at least one coal pipe having an inner diameter and an outer diameter. The system can further include at least one sleeve or at least one liner between the coal pipe inner diameter and outer diameter, wherein the velocity of a primary air and pulverized coal mixture is increased in an upstream portion of the coal pipe, and wherein velocity of the primary air and pulverized coal mixture is reduced in a downstream portion of the coal pipe.

Other embodiments and aspects of embodiments of the invention will become apparent from the following description taken in conjunction with the accompanying drawings.

Having thus described the invention in general terms, reference will now be made to the accompanying drawings, which are not necessarily drawn to scale, and wherein:

Figure 1 depicts an example of a conventional pulverized coal burner.

Figure 2 shows an end view of an example pulverized coal burner in accordance with an embodiment of the invention.

Figure 3 shows an end view of an example pulverized coal burner in accordance with an embodiment of the invention.

Figure 4 shows a side view of an example pulverized coal burner in accordance with an embodiment of the invention.

Figure 5 shows an end view of an example pulverized coal burner in accordance with an embodiment of the invention.

Figure 6 illustrates a sleeve embodiment of the example pulverized coal burner shown in Figure 2 in accordance with an embodiment of the invention

Figure 7 illustrates a liner embodiment of the example pulverized coal burner shown in Figure 5 in accordance with an embodiment of the invention.

Figure 8 depicts an example transition ramp for a pulverized coal burner in accordance with an embodiment of the invention.

Figure 9 depicts an embodiment of a pulverized coal burner in accordance with an embodiment of the invention.

Figure 10 illustrates an example apparatus and system for facilitating varying coal pipes for a pulverized coal burner.

Figure 11 illustrates an example method in accordance with an embodiment of the invention.

Embodiments of the invention will now be described more fully hereinafter with reference to the accompanying drawings. This invention may, however be embodied in many different forms and should not be construed as limited to the embodiment set forth herein; rather, embodiments are provided so that this disclosure will be thorough and complete, and will convey the scope of the invention.

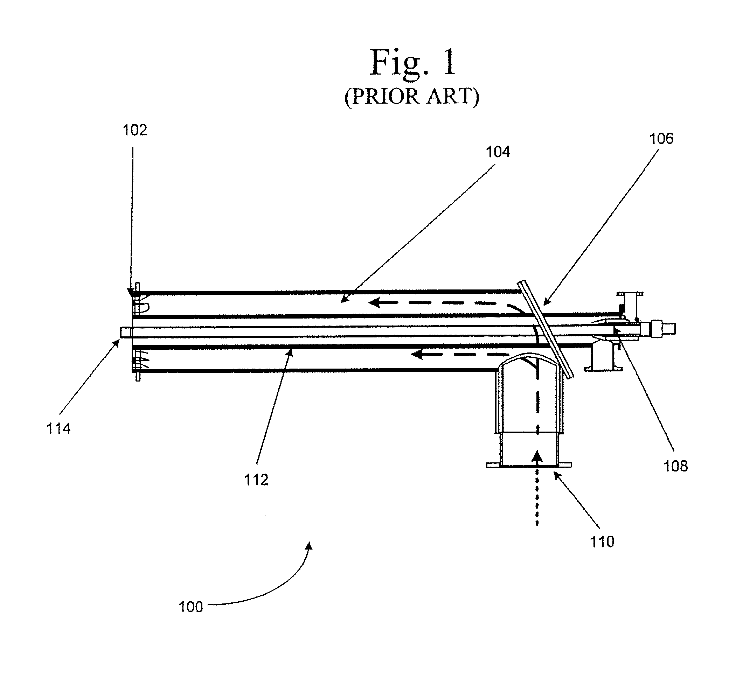

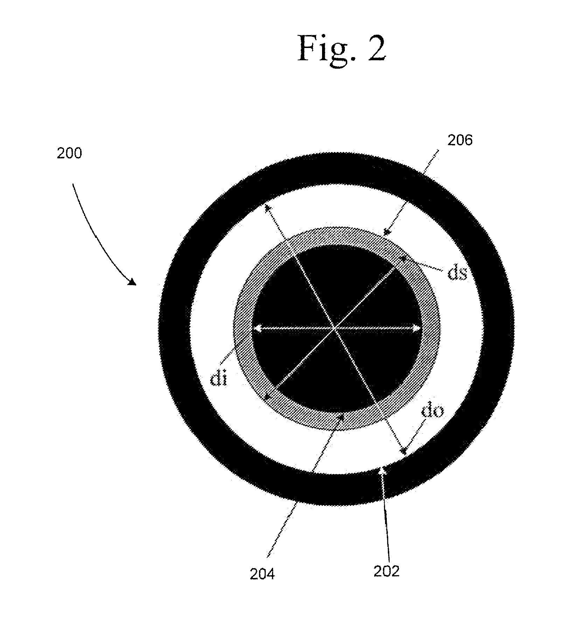

As used herein, the term "sleeve" refers to a structure that is adjacent to, borders, surrounds, mounts to, or is otherwise attached to an outer portion of a core pipe, such as 112 in Figure 1. One example of a sleeve is shown as 206 in the cross-section 200 of Figure 2, and can include a sleeve diameter (ds). In some embodiments, a sleeve may be a single piece or comprised of multiple pieces.

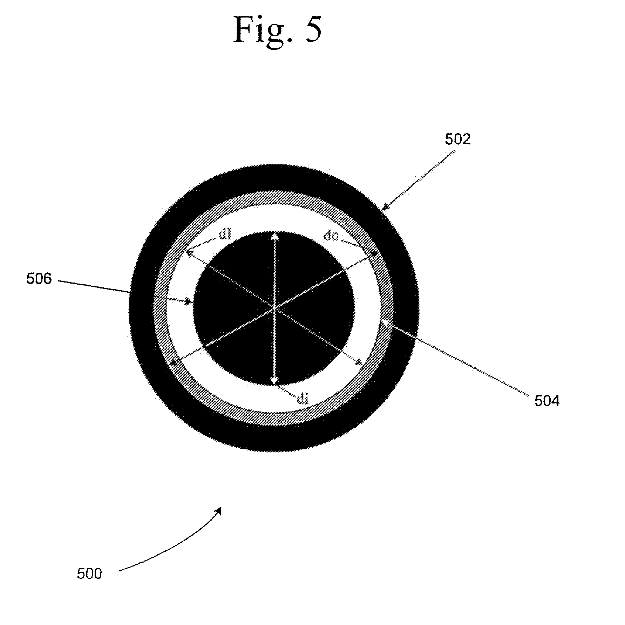

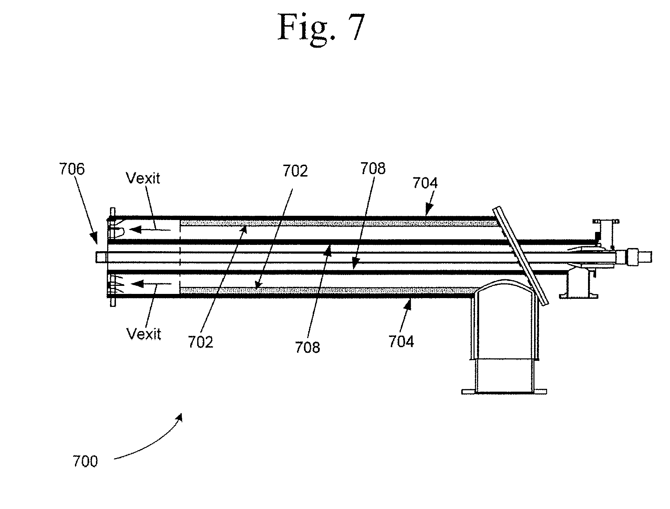

As used herein, the term "liner" refers to a structure that is adjacent to, borders, mounts to, or is otherwise attached to an inner portion of a coal pipe, such as 104 in Figure 1. One example of a liner is shown as 504 in Figure 5 and 702 in Figure 7, and can include a liner inside diameter (dl). In some embodiments, a liner may be a single piece or comprised of multiple pieces.

As used herein, the term "fuel mixture" refers to a mixture of primary air and pulverized coal. Other embodiments may include mixtures of primary air and other fuel types.

As used herein, the term "upstream" refers to a section of a coal pipe nearest to an inlet duct, such as 110 in Figure 1, and the term "downstream" refers to a section of a coal pipe nearest to an ignitor and flame end, such as 114 in Figure 1, where a fuel mixture exits the coal pipe, such as 104 in Figure 1.

Figure 1 depicts an example of a conventional pulverized coal burner. The pulverized coal burner 100 is configured with a flame stabilizer 102 at a downstream end of a coal pipe 104, and a splash plate 106 at an opposing or upstream end of the coal pipe 104. The pulverized coal burner 100 also includes a mounted gas gun and tube assembly 108, an inlet duct 110, and a core pipe 112. The gas gun and tube assembly 108 is coaxially mounted inside a core pipe 112, and both the gas gun and tube assembly 108 and core pipe 112 are coaxially mounted within the coal pipe 104. A mixture of primary air and pulverized coal, or fuel mixture, enters the burner 100 through the inlet duct 110 adjacent to the upstream end of the burner 100. The splash plate 106 helps re-direct the primary air and pulverized coal mixture, or fuel mixture, through the coal pipe 104 towards the downstream end of the burner 100, through the flame stabilizer 102 adjacent to the downstream end, and to the ignitor and flame region 114, which is typically adjacent to a furnace.

Embodiments of a pulverized coal burner in accordance with the invention are shown with respect to Figures 2 - 11. Certain embodiments of the invention can provide improvements in the operation of a pulverized coal burner. In one such embodiment, one or more sleeves and/or liners can be installed within an associated coal pipe to increase velocity of the primary air /pulverized coal mixture, or fuel mixture, in an upstream portion of the coal pipe while simultaneously reducing velocity of the fuel mixture at an opposing end or downstream end of the coal pipe. The increased velocity at the upstream portion of the coal pipe tends to reduce coal dropout, while the reduced velocity at the downstream end tends to improve flame stability and can suppress excess production of nitrogen oxides (NOx).

To illustrate example principles for improving operation of a pulverized coal burner in accordance with embodiments of the invention, Figures 2 - 5 illustrate certain geometries associated with components of various pulverized coal burners in accordance with embodiments of the invention.

Figure 2 shows an end view of a pulverized coal burner in accordance with an embodiment of the invention. The burner cross-section 200 is annular-shaped and defined by a coal pipe 202 and a coaxially positioned core pipe 204 with a sleeve 206 adjacent to an outer portion of the core pipe 204. An outer diameter (do) of the cross-section 200 is defined by a distance between at least two inner portions of the coal pipe 202, and an inner diameter (di) of the cross-section is defined by a distance between at least two outer portions of the core pipe 204. A sleeve diameter (ds) is defined by a distance between at least two outer portions of the sleeve 206.

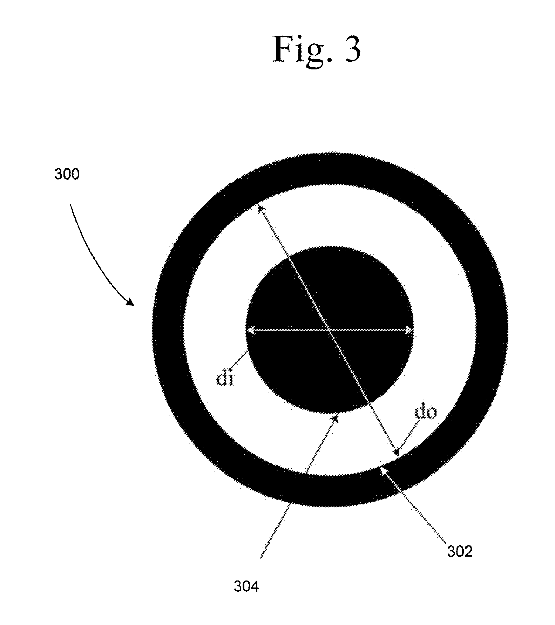

Figure 3 shows an end view of a pulverized coal burner in accordance with an embodiment of the invention. Figure 3 represents reducing the at least one sleeve or liner, wherein velocity of the primary air and pulverized coal mixture is reduced in a downstream portion of the coal pipe. The term "reducing" can mean removing, omitting, or making less thick, and therefore, reducing the sleeve or liner in a portion of the coal pipe increases the volume of the coal pipe and reduces the velocity of the primary air and pulverized coal mixture in that section of the coal pipe. The burner cross-section 300 is annular-shaped defined by a coal pipe 302 and a coaxially positioned core pipe 304. An outer diameter (do) of the cross-section 300, similar to the outer diameter (do) in Figure 2, is defined by a distance between at least two inner portions of the coal pipe 302, and an inner diameter (di) of the cross-section 300, similar to the inner diameter (di) in Figure 2, is defined by a distance between at least two outer portions of the core pipe 304.

Figure 5 shows an end view of a pulverized coal burner in accordance with an embodiment of the invention. The burner cross-section 500 is annular-shaped defined by a coal pipe 502 and a coaxially positioned core pipe 506 with a liner 504 adjacent to an inner portion of the coal pipe 502. An outer diameter (do) of the cross-section 500, similar to the outer diameter (do) in Figures 2 and 3, is defined by a distance between at least two inner portions of the coal pipe 502, and an inner diameter (di) of the cross-section 500, similar to the inner diameter (di) in Figures 2 and 3, is defined by a distance between at least two outer portions of the core pipe 506. A liner diameter (dl) is defined by a distance between at least two inner portions of the liner 504. In one embodiment, the core pipe 506 may be absent from the arrangement, and thus the coal pipe 502 would be coreless. In that embodiment, the cross-section would have a similar outer diameter (do) as the outer diameter (do) in Figure 3, but the inner diameter (di) would be zero.

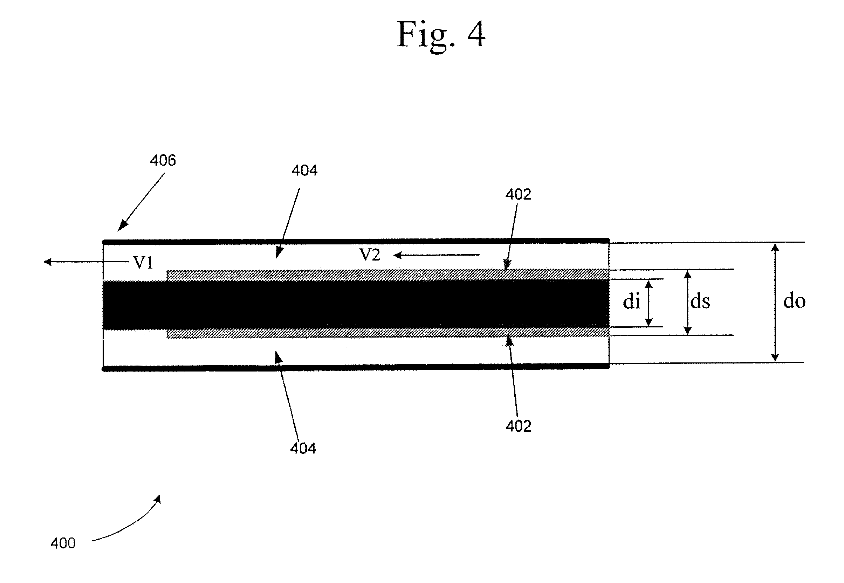

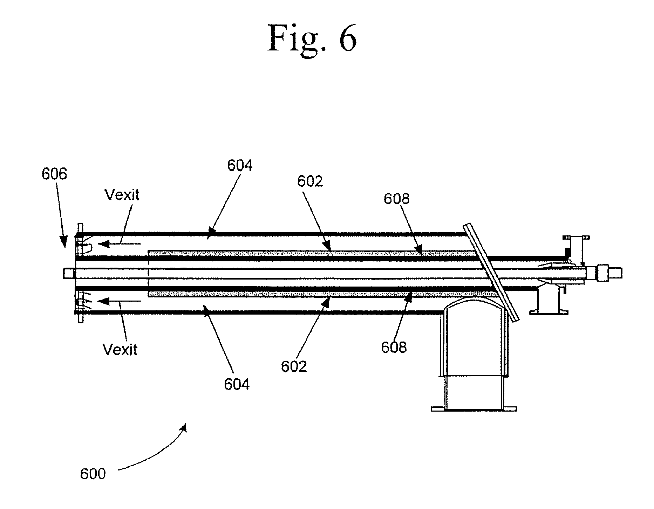

Referring to Figures 4 and 6, an ideal velocity V2 of a fuel mixture within the coal pipe 404, 604, or at the upstream end, may differ from an ideal velocity V1, Vexit at the burner end adjacent to the ignitor and flame region 606, or at the downstream end 406, due to opposing requirements. For example, a relatively high fuel mixture velocity in the coal pipe 404, 604 can help prevent or otherwise minimize coal or other fuel particulate from "falling out of the air" and clogging the coal pipe 404, 604. On the other hand, a relatively low fuel mixture velocity at a downstream end adjacent burner exit 606 may be needed to control flame instability, and to reduce the generation of nitrogen oxides (NOx).

The velocities V1, V2 of the fuel mixture within the coal pipe 404 is typically determined by the flow rate, the flow temperature, and the cross-sectional area within the coal pipe 404. For a pulverized coal burner in accordance with embodiments of the invention, injection flow rate and flow temperature are usually fixed. Therefore, the flow area multiplied by the flow velocity is maintained relatively constant.

Figures 4 and 6 illustrate respective side views of an example pulverized coal burner 400, 600 in accordance with an embodiment of the invention. If a sleeve 402, 602 is installed in a portion of the coal pipe 404, 604, the cross-section 200 of the coal pipe 404, 604 can be defined by an annulus with an outer diameter (do) and an inner (sleeve) diameter (ds), as depicted in Figure 2. Towards the downstream end 406, 606 of the burner 400, 600, where the sleeve 402, 602 is reduced or is omitted, the cross-section 300 of the coal pipe 404, 604 can be defined by an annulus with an outer diameter (do) and an inner diameter (di), where the inner diameter (di) is typically defined by the outer diameter of the core pipe 304, as depicted in Figure 3.

With reference to Figure 4, given a target exit velocity V1, the radial thickness of the sleeve 402 needed to produce a target velocity V2 within an upstream portion or end 406 of the coal pipe 404 can be calculated using the following equations (1), (2), and (3).

$$\pi \cdot \left[ \left( \frac{do}{2} \right)^2 - \left( \frac{ds}{2} \right)^2 \right] \cdot V_2 = \pi \cdot \left[ \left( \frac{do}{2} \right)^2 - \left( \frac{di}{2} \right)^2 \right] \cdot V_1 \qquad (1)$$

$$ds = \sqrt{\frac{do^2 \cdot (V_2 - V_1) + di^2 \cdot V_1}{V_2}} \qquad (2)$$

$$Thickness_{Sleeve} = \frac{ds - di}{2} \qquad (3)$$

In one example, V1 = 50 ft/s (15.2 m/s), V2 = 60 ft/s (18.3 m/s), do = 20 inches (50.8 cm), di = 10 inches (25.4 cm). From equation (2), a sleeve diameter (ds) can be calculated to be approximately 12.25 inches (31.1 cm). A sleeve thickness calculated from equation (3) can be calculated to be approximately 1.125 inches (2.86 cm). Using some or all of the equations (1), (2), and (3), one can perform a similar calculation to determine geometric requirements for a liner embodiment, as shown in Figures 5 and 7.

Embodiments of the invention can include any combination of at least one sleeve and/or at least one liner. In the example pulverized coal burner 600 shown in Figure 6, a sleeve 602 is mounted to and surrounds the core pipe 608. Figure 7, in contrast, shows an example coal burner 700 with a liner 702 mounted to the interior portion of the coal pipe 704. Any number of embodiments can exist where the fuel mixture velocity is controlled or otherwise affected by any combination of liner and/or sleeve pieces, sections, or components. Depending on flow conditions within the associated coal pipe 604, 704, a sleeve and/or liner can be installed between the inner portion of the coal pipe 604, 704 and the outer portion of the core pipe 608, 708, and close proximity to or otherwise in contact with either or both.

In this manner, the relative exit velocity (Vexit) can be reduced, thereby reducing or minimizing flow recirculation and turbulence of the fuel mixture at the downstream end 606, 706 of the burner 600, 700, which can stabilize burner combustion characteristics, i.e., the burner flame. If the sleeve and/or liner abruptly ends, for example, within approximately 6 inches (15.2 cm) of the downstream end 606, 706 of the burner 600, 700, a relatively higher probability may exist that unwanted turbulence will be generated near or adjacent to the downstream end 606, 706 of the burner 600, 700, thereby resulting in possible flow recirculation and/or flame instability.

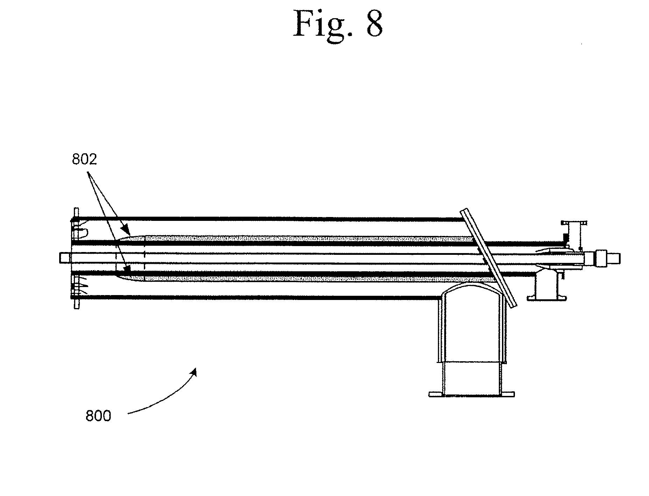

Figure 8 depicts an example transition ramp for a pulverized coal burner in accordance with an embodiment of the invention. To minimize or otherwise reduce turbulence generated near or adjacent to an downstream end of a burner, at least one burner embodiment 800 includes a transition sleeve, liner, or ramp 802, as shown in Figure 8. In this manner, turbulence caused by velocity discontinuities in the coal pipe can be minimized. In one embodiment, a transition ramp, similar to 802 as shown in Figure 8, can also be applied in a similar fashion to a liner, for example, the liner 702 for burner 700 of Figure 7.

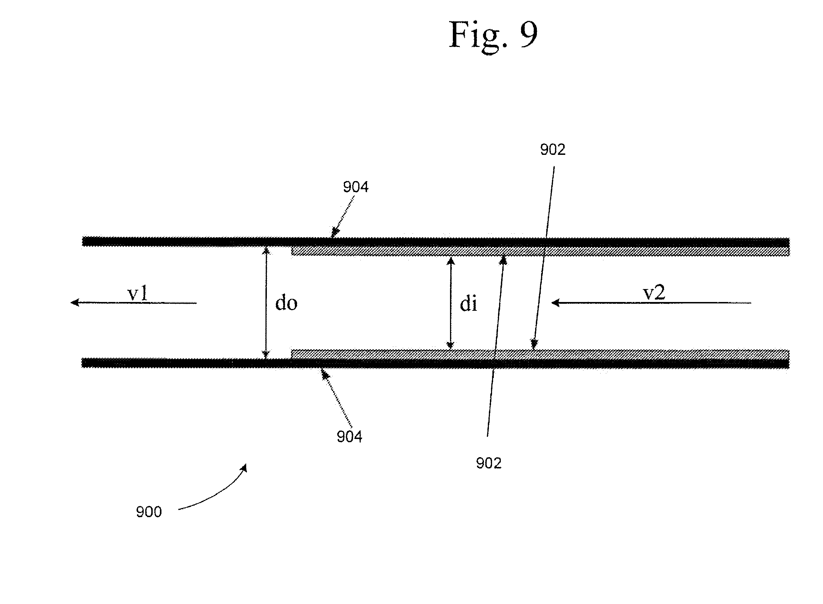

One pulverized coal burner embodiment is described by way of Figure 9, which depicts a burner 900 with a coreless coal pipe and a liner 902 mounted adjacent to the inner portion of the coal pipe 904. In this embodiment, the respective fuel mixture upstream and exit velocities, V1 and V2, are related to the respective coal pipe and liner diameters, do and dl, by the equation:

$$\pi \cdot do^2 \cdot V1 = \pi \cdot dl^2 \cdot V2 \qquad (4)$$

where again, a transition ramp element or feature, similar to 802 of Figure 8, may be applied to the liner 902 shown to reduce or otherwise minimize turbulence and flow recirculation.

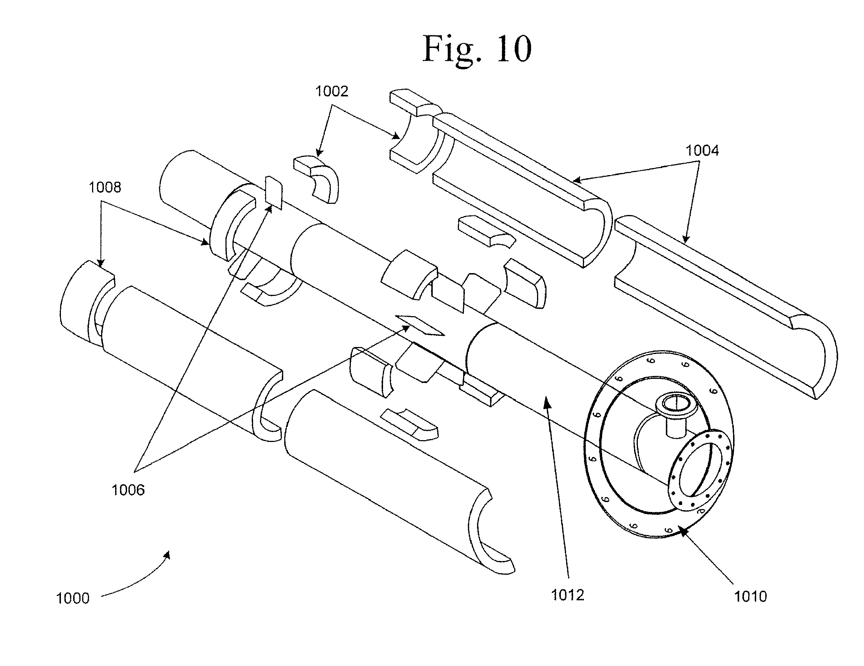

In one embodiment, a sleeve and/or liner can be installed in multiple corresponding and adjacent sections to accommodate existing obstructions that would otherwise prevent or hinder the installation of a single or single-piece sleeve and/or liner. As shown in Figure 10, one embodiment can include multiple sleeve pieces 1002, 1004, 1008 which can mount adjacent to the core pipe 1012 to accommodate any number of stabilizing or support members 1006 which may also mount to the core pipe 1012. Note that a coal pipe is not shown in Figure 10, but after the sleeve sections are installed, the outer coal pipe would coaxially mount to the splash plate 1010 to complete a burner assembly similar in structure to the burner 600 in Figure 6.

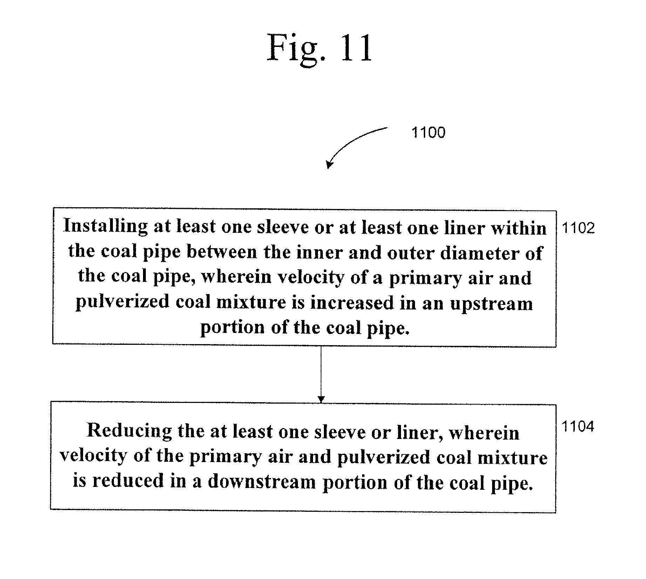

Figure 11 illustrates an example method in accordance with an embodiment of the invention. Other method embodiments can include fewer or greater elements, and may have alternate arrangements in accordance with the invention.

The method 1100 begins at block 1102, wherein at least one sleeve or at least one liner can be installed within the coal pipe between the inner and outer diameter of the coal pipe, wherein velocity of a primary air and pulverized coal mixture is increased in an upstream portion of the coal pipe.

Block 1102 is followed by block 1104, wherein the at least one sleeve or liner can be reduced, wherein velocity of the primary air and pulverized coal mixture is reduced in a downstream portion of the coal pipe.

The method 1100 ends at block 1104.

The methods, systems and apparatus disclosed herein are by way of example only, and other methods in accordance with the embodiments of the invention can include other elements or steps, including fewer or greater numbers of elements or steps than the example methods described herein as well as various combinations of these or other elements.

While the above description contains many specifics, these specifics should not be construed as limitations on the scope of the invention, but merely as exemplifications of the disclosed embodiments. Those skilled in the art will envision many other possible variations that are within the scope of the invention.

Various aspects and embodiments of the present invention are defined by the following numbered clauses:

1. A method for improving operation of a pulverized coal burner comprising at least one coal pipe having an inner diameter, and an outer diameter, the method comprising:

   installing at least one sleeve or at least one liner within the coal pipe between the inner and outer diameter of the coal pipe, wherein velocity of a primary air and pulverized coal mixture is increased in an upstream portion of the coal pipe; and

   reducing the at least one sleeve or liner, wherein velocity of the primary air and pulverized coal mixture is reduced in a downstream portion of the coal pipe.

2. The method of Clause 1, wherein the at least one sleeve or at least one liner terminates within about 10 to about 20 inches (25.4 to 50.8 cm) from a downstream end of the burner.

3. The method of any preceding clause, wherein the at least one sleeve or at least one liner comprises a ceramic, metal, or a high temperature resistant material.

4. The method of any preceding clause, wherein the at least one sleeve or at least one liner comprises at least one transition ramp or device to prevent flow recirculation.

5. The method of any preceding clause, wherein the at least one sleeve or at least one liner comprises a plurality of sleeve or liner components or sections.

6. The method of any preceding clause, wherein a thickness of the at least one sleeve or at least one liner is determined by the equations:

$$ds = \sqrt{\frac{do^2 \cdot (V_2 - V_1) + di^2 \cdot V_1}{V_2}}$$

$$Thickness = \frac{ds - di}{2}$$

   wherein, ds is an outer diameter of the at least one sleeve, do is an outer diameter of the coal pipe, di is an inner diameter of the coal pipe, V2 is a target velocity of the primary air and pulverized coal mixture within the upstream portion of the coal pipe, and V1 is a target exit velocity of the primary air and pulverized coal mixture.

7. The method of any preceding clause, wherein the at least one sleeve or at least one liner is mounted coaxially and in close proximity to an inner diameter, of at least one coal pipe, or coaxially and in close proximity to an outer diameter, of the at least one coal pipe.

8. An apparatus for improving operation of a pulverized coal burner comprising at least one coal pipe having an inner diameter, and an outer diameter, the apparatus comprising:

   at least one sleeve or at least one liner installed within the coal pipe between the inner and outer diameter of the coal pipe, wherein velocity of a primary air and pulverized coal mixture is increased in an upstream portion of the coal pipe; and

   wherein the at least one sleeve or at least one liner is reduced in a downstream portion of the coal pipe to reduce the velocity of the primary air and pulverized coal mixture.

9. The apparatus of Clause 8, wherein the at least one sleeve or at least one liner terminates within about 10 to about 20 inches (25.4 to 50.8 cm) from a downstream end of the burner.

10. The apparatus of Clause 8 or 9, wherein the at least one sleeve or at least one liner comprises a ceramic, a metal, or a high temperature resistant material.

11. The apparatus of any of clauses 8 to 10, wherein the at least one sleeve or at least one liner comprises at least one transition ramp or device to prevent flow recirculation.

12. The apparatus of any of clauses 8 to 11, wherein the at least one sleeve or at least one liner comprises a plurality of sleeve or liner components or sections.

13. The apparatus of any of clauses 8 to 12, wherein a thickness of the at least one sleeve or at least one liner is determined by the equations:

$$ds = \sqrt{\frac{do^2 \cdot (V_2 - V_1) + di^2 \cdot V_1}{V_2}}$$

$$Thickness = \frac{ds - di}{2}$$

wherein, ds is an outer diameter of the at least one sleeve, do is an outer diameter of the coal pipe, di is an inner diameter of the coal pipe, V2 is a target velocity of the primary air and pulverized coal mixture within the coal pipe, and V1 is a target exit velocity of the primary air and pulverized coal mixture.

14. A combustion system comprising:

at least one burner starter;

at least one core pipe, wherein the at least one burner starter is mounted within at least one core pipe;

at least one coal pipe having an inner diameter and an outer diameter;

at least one sleeve or at least one liner between the coal pipe inner diameter, and outer diameter, wherein the velocity of a primary air and pulverized coal mixture is increased in an upstream portion of the coal pipe, and wherein velocity of the primary air and pulverized coal mixture is reduced in a downstream portion of the coal pipe.

15. The system of Clause 14, wherein the at least one sleeve or at least one liner terminates within about 10 to about 20 inches (25.4 to 50.8 cm) from a downstream end of the burner.

16. The system of Clause 14 or 15, wherein the at least one sleeve or at least one liner comprises a ceramic, metal, or a high temperature resistant material.

17. The system of any of Clauses 14 to 16, wherein the at least one sleeve or at least one liner comprises at least one transition ramp or device to prevent flow recirculation.

18. The system of any of Clauses 14 to 17, wherein the at least one sleeve or at least one liner comprises a plurality of sleeve or liner components or sections.

19. The system of any of Clauses 14 to 18, wherein a thickness of the at least one sleeve or at least one liner is determined by the equations:

$$ds = \sqrt{\frac{do^2 \cdot (V_2 - V_1) + di^2 \cdot V_1}{V_2}}$$

$$Thickness = \frac{ds - di}{2}$$

wherein, ds is an outer diameter of the at least one sleeve, do is an outer diameter of the coal pipe, di is an inner diameter of the coal pipe, V2 is a target velocity of the primary air and pulverized coal mixture within the coal pipe, and V1 is a target exit velocity of the primary air and pulverized coal mixture at the burner.

20. The system of any of Clauses 14 to 19, wherein the at least one sleeve or at least one liner is mounted coaxially and in close proximity to an outer diameter, of the at least one coal pipe, or coaxially and in close proximity to an inner diameter, of the at least one coal pipe.

**Claims**

1. A method for improving operation of a pulverized coal burner (100) **characterised by** at least one coal pipe (604) having an inner diameter (204), and an outer diameter (202), the method **characterised by**:

   installing at least one sleeve (602) or at least one liner (702) within the coal pipe between the inner (304) and outer (302) diameter of the coal pipe (604), wherein velocity of a primary air and pulverized coal mixture is increased in an upstream portion of the coal pipe (604); and
   reducing the at least one sleeve (602) or liner (702), wherein velocity of the primary air and pulverized coal mixture is reduced in a downstream portion of the coal pipe (604).

2. The method of claim 1, wherein the at least one sleeve (602) or at least one liner (702) terminates within about 10 to about 20 inches (25.4 to 50.8 cm) from a downstream end (606) of the burner.

3. The method of any preceding claim, wherein the at least one sleeve (602) or at least one liner (702) is **characterised by** a ceramic, metal, or a high temperature resistant material.

4. The method of any preceding claim, wherein the at least one sleeve (602) or at least one liner (702) is **characterised by** at least one transition ramp (802) or device to prevent flow recirculation.

5. The method of any preceding claim, wherein the at least one sleeve (602) or at least one liner (702) is **characterised by** a plurality of sleeve or liner components or sections (1004).

6. The method of any preceding claim, wherein a thickness of the at least one sleeve (602) or at least one liner (702) is determined by the equations:

$$ds = \sqrt{\frac{do^2 \cdot (V_2 - V_1) + di^2 \cdot V_1}{V_2}}$$

$$Thickness = \frac{ds - di}{2}$$

wherein, ds is an outer diameter of the at least one sleeve (602), do is an outer diameter of the coal pipe (302), di is an inner diameter of the coal pipe (304), V2 is a target velocity of the primary air and pulverized coal mixture within the upstream portion of the coal pipe (404), and V1 is a target exit (406) velocity of the primary air and pulverized coal mixture.

7. The method of any preceding claim, wherein the at least one sleeve (206) or at least one liner (504) is mounted coaxially and in close proximity to an inner diameter (204), of at least one coal pipe, or coaxially and in close proximity to an outer diameter (202), of the at least one coal pipe.

8. An apparatus for improving operation of a pulverized coal burner (100) **characterised by** at least one coal pipe (604) having an inner diameter (204), and an outer diameter (202), the apparatus **characterised by**:

   at least one sleeve (206) or at least one liner (504) installed within the coal pipe (604) between the inner (204) and outer (202) diameter of the coal pipe (604), wherein velocity of a primary air and pulverized coal mixture is increased in an upstream portion of the coal pipe (604); and
   wherein the at least one sleeve (602) or at least one liner (702) is reduced in a downstream portion of the coal pipe (604) to reduce the velocity (Vexit) of the primary air and pulverized coal mixture.

9. The apparatus of claim 8, wherein the at least one sleeve (602) or at least one liner (702) is **characterized by** at least one transition ramp (802) or device to prevent flow recirculation.

10. A combustion system **characterised by** at least one burner starter (114) and further **characterised by**:

    at least one core pipe (104), wherein the at least one burner starter (108, 114) is mounted within at least one core pipe (112);
    at least one coal pipe (604) having an inner diameter (304) and an outer diameter (302); at least one sleeve (602) or at least one liner (702) between the coal pipe inner diameter (304), and outer diameter (302), wherein the velocity of a primary air and pulverized coal mixture is increased in an upstream portion of the coal pipe, and wherein velocity of the primary air and pulverized coal mixture is reduced in a downstream portion of the coal pipe.

Fig. 1
(PRIOR ART)

# Fig. 2

200

206

ds

di

do

204

202

EP 2 169 306 A1

EP 2 169 306 A1

# Fig. 3

# Fig. 4

Fig. 5

Fig. 6

Fig. 7

Fig. 8

802

800

Fig. 9

v1    do    di    v2

902    902    904    904    900

Fig. 10

# Fig. 11

1100

---

| Installing at least one sleeve or at least one liner within the coal pipe between the inner and outer diameter of the coal pipe, wherein velocity of a primary air and pulverized coal mixture is increased in an upstream portion of the coal pipe. | 1102 |

---

| Reducing the at least one sleeve or liner, wherein velocity of the primary air and pulverized coal mixture is reduced in a downstream portion of the coal pipe. | 1104 |

Europäisches
Patentamt

European
Patent Office

Office européen
des brevets

# EUROPEAN SEARCH REPORT

Application Number

EP 09 17 1043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 231 937 A (KOBAYASHI HIRONOBU [JP] ET AL) 3 August 1993 (1993-08-03)<br>* column 3, line 35 - line 55 *<br>* column 5, line 36 - line 53 *<br>* column 8, line 45 - column 9, line 4 *<br>* column 11, line 18 - column 12, line 46 *<br>* column 15, line 3 - line 7; claims 1,10,27,32; figures 2-4,6-8 *<br>----- | 1-10 | INV.<br>F27D23/00<br>F23D1/00<br>F23D17/00 |
| X | JP 62 172105 A (HITACHI LTD; BABCOCK HITACHI KK) 29 July 1987 (1987-07-29)<br>* abstract; figures 1,2,8 *<br>----- | 1,8,10 | |
| X | US 6 237 510 B1 (TSUMURA TOSHIKAZU [JP] ET AL) 29 May 2001 (2001-05-29)<br>* column 2, line 66 - column 4, line 63; figures 21,23,25,40,41 *<br>* column 6, line 17 - line 25 *<br>* column 12, line 4 - line 17; claims 1,36 *<br>----- | 1,8,10 | |
| X | US 4 951 581 A (WIEST MICHAEL R [US]) 28 August 1990 (1990-08-28)<br>* column 2, line 57 - column 4, line 5; claim 1; figures 1,4,6 *<br>----- | 1,8,10 | TECHNICAL FIELDS SEARCHED (IPC)<br>F23D<br>F27D<br>F27B |
| X | JP 2003 222310 A (BABCOCK HITACHI KK) 8 August 2003 (2003-08-08)<br>* abstract; figures 2,4,6 *<br>----- | 1,8,10 | |
| A | US 5 762 007 A (VATSKY JOEL [US]) 9 June 1998 (1998-06-09)<br>* the whole document *<br>----- | 1-10 | |

The present search report has been drawn up for all claims

| Place of search | Date of completion of the search | Examiner |
|---|---|---|
| Munich | 8 January 2010 | Gavriliu, Alexandru |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 1043

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2010

| Patent document cited in search report | | Publication date | Patent family member(s) | | Publication date |
|---|---|---|---|---|---|
| US 5231937 | A | 03-08-1993 | AU | 620273 B2 | 13-02-1992 |
| | | | AU | 7194791 A | 03-10-1991 |
| | | | CA | 2037755 C | 27-06-1995 |
| | | | DE | 69120441 D1 | 01-08-1996 |
| | | | DE | 69120441 T2 | 23-01-1997 |
| | | | EP | 0445938 A1 | 11-09-1991 |
| | | | FI | 910871 A | 08-09-1991 |
| JP 62172105 | A | 29-07-1987 | NONE | | |
| US 6237510 | B1 | 29-05-2001 | AT | 327476 T | 15-06-2006 |
| | | | AT | 288051 T | 15-02-2005 |
| | | | AU | 709979 B2 | 09-09-1999 |
| | | | AU | 2650097 A | 10-02-1998 |
| | | | CA | 2231403 A1 | 29-01-1998 |
| | | | CN | 1198207 A | 04-11-1998 |
| | | | CZ | 9800776 A3 | 16-09-1998 |
| | | | DE | 69732341 D1 | 03-03-2005 |
| | | | DE | 69732341 T2 | 18-05-2006 |
| | | | DE | 69735965 T2 | 04-01-2007 |
| | | | DK | 1335164 T3 | 18-09-2006 |
| | | | EP | 1335164 A1 | 13-08-2003 |
| | | | EP | 0852315 A1 | 08-07-1998 |
| | | | ES | 2260534 T3 | 01-11-2006 |
| | | | ES | 2232866 T3 | 01-06-2005 |
| | | | ID | 17830 A | 29-01-1998 |
| | | | WO | 9803819 A1 | 29-01-1998 |
| | | | JP | 3892046 B2 | 14-03-2007 |
| | | | JP | 4235218 B2 | 11-03-2009 |
| | | | JP | 2007057228 A | 08-03-2007 |
| | | | KR | 100268241 B1 | 01-12-2000 |
| | | | PL | 325530 A1 | 03-08-1998 |
| | | | RO | 118900 B1 | 30-12-2003 |
| | | | RU | 2153129 C2 | 20-07-2000 |
| US 4951581 | A | 28-08-1990 | NONE | | |
| JP 2003222310 | A | 08-08-2003 | JP | 4056752 B2 | 05-03-2008 |
| US 5762007 | A | 09-06-1998 | NONE | | |

EPO FORM P0459

For more details about this annex : see Official Journal of the European Patent Office, No. 12/82